# FASCICULE DE BREVET EUROPEEN

(11) **EP 4 313 691 B1**
(45) Date de publication et mention de la délivrance du brevet: **26.03.2025**
(21) Numéro de dépôt: 22710697.8
(22) Date de dépôt: 24.02.2022
(51) Int. Cl.: B60R 19/24

(54) **INTERFACE DE FIXATION D'UN D'EQUIPEMENT EXTERIEUR DE VEHICULE**
SCHNITTSTELLE ZUR BEFESTIGUNG EINES FAHRZEUGAUSSENAUSSTATTUNGSTEILS
INTERFACE FOR ATTACHING AN EXTERIOR VEHICLE FITTING

(30) Priorité: 26.03.2021 FR 2103116
(43) Date de publication de la demande: 07.02.2024
(73) Titulaire: Stellantis Auto SAS, 78300 Poissy (FR)
(72) Inventeur: BOUDAN, Julien, 91210 DRAVEIL (FR)
(74) Mandataire: BCIP
(86) Numéro de dépôt international: PCT/FR2022/050345
(87) Numéro de publication internationale: WO 2022/200708

(56) Documents cités:
- WO-A1-2009/013416
- FR-A1- 2 789 956
- US-A1- 2015 291 113
- US-A1- 2019 270 422

## Description

### DOMAINE TECHNIQUE DE L'INVENTION

L'invention concerne la fonction de fixation d'une pièce d'équipement extérieur d'un véhicule, en tenant compte de la nécessité de rattraper les jeux lors du montage et de sa fixation.

L'invention concerne aussi la fonction d'évacuation d'eau de cette même pièce d'équipement extérieur au niveau de la zone de fixation.

L'invention concerne en particulier un agencement d'une pièce d'équipement extérieur de véhicule avec une fixation avec rattrapage des jeux et une fonction d'évacuation de l'eau au niveau de la zone de fixation.

L'invention concerne en particulier un agencement d'une peau de pare-chocs comprenant une fixation avec rattrapage des jeux et une fonction d'évacuation de l'eau au niveau de la zone de ladite fixation.

L'invention concerne aussi un véhicule comprenant une pièce d'équipement extérieur de véhicule ou une peau de pare-chocs selon l'invention.

### ARRIÈRE-PLAN TECHNOLOGIQUE DE L'INVENTION

Pour améliorer l'aspect esthétique d'une fixation d'un équipement extérieur de véhicule il est connu de disposer l'interface de fixation au niveau d'un logement ou d'une cavité afin de rendre cette fixation invisible et d'éventuellement la recouvrir d'un cache.

Le document FR2789956 décrit un pare-chocs comprenant une cavité au fond de laquelle il est prévu un trou pour le passage d'une vis de fixation. Ladite cavité est recouverte par un couvercle pivotant permettant de masquer la fixation à la vue.

Du fait des dispersions de fabrication il est aussi nécessaire de pouvoir rattraper ces dispersions de fabrication lors du montage et de la fixation de la pièce d'équipement extérieur au moins dans une direction donnée. L'homme du métier a connaissance d'orifice de forme oblongue de largeur égale au diamètre d'une vis de fixation et de longueur supérieure audit diamètre, permettant lors de la fixation de rattraper les jeux dans le sens de la longueur de l'orifice de fixation.

Cependant du fait de dimensions toujours plus contraintes, les dimensions du logement sont toujours plus restreintes. Ainsi les parois de la cavité, dans laquelle est positionnée la vis de fixation, limitent ou empêchent un déplacement suffisant de la vis dans l'orifice de fixation pour un rattrapage correct des jeux.

L'état antérieur de la technique n'est donc pas assez efficace pour proposer une définition d'un agencement d'une pièce d'équipement extérieur et d'au moins une de ses fixations qui permet pour une fixation disposée au sein d'une cavité de dimensions restreintes à la fois un rattrapage suffisant des jeux ou dispersions de fabrications lors du montage et de la fixation de la pièce d'équipement extérieur et qui permet aussi une évacuation de l'eau pouvant s'infiltrer au sein de la cavité.

L'invention a pour objet de résoudre les problèmes de l'art antérieur. En particulier, l'un des objectifs de l'invention est de permettre un rattrapage des dispersions ou jeux de fabrication lors du montage et de la fixation de la pièce d'équipement avec une fixation au sein d'une cavité de dimensions restreintes. L'invention a aussi pour objectif de permettre simultanément une évacuation de l'eau de la cavité.

On notera que l'invention s'applique aussi à tout agencement d'une pièce d'équipement tant intérieur qu'extérieur et de sa fixation, avec le rattrapage des jeux, et ce pour une fixation disposée au sein d'une cavité de dimensions restreintes.

La fonction d'évacuation de l'eau concerne plus particulièrement les pièces d'équipements extérieurs.

### DESCRIPTION GENERALE DE L'INVENTION

A cette fin l'invention propose une pièce d'équipement de véhicule comportant :
- Une paroi support,
- Une cavité de fixation débouchant par une ouverture dans la paroi support,
- La cavité de fixation comportant une paroi de fond reliée à la paroi support par une paroi latérale,
- La paroi de fond comportant un orifice de fixation destiné à être traversé par une vis de fixation comportant une tête de fixation,
remarquable en ce que la paroi latérale comportant un trou de passage disposé à la jonction avec la paroi de fond, s'étendant au moins parallèlement à la paroi de fond, de sorte à permettre le passage d'une partie de la tête fixation dans le trou de passage lors du déplacement de la vis de fixation disposée dans l'orifice de fixation, en direction dudit trou de passage.

Ainsi avantageusement, lorsque la pièce est assemblée au véhicule par une vis traversant l'orifice de fixation sans être serrée, la pièce peut être déplacée suivant un débattant important grâce au trou de passage permettant à la tête de vis de ne pas être en butée contre la paroi latérale de la cavité de fixation. Ainsi, la dimension de la paroi de fond peut être réduite tout en conservant une amplitude important de déplacement de la pièce pré-maintenue par la vis de fixation, au moins dans une direction parallèle à la paroi de fond.

Un autre avantage est que le trou de passage permet une évacuation de l'eau.

Dans un mode de réalisation de l'invention, la pièce d'équipement forme une pièce de façade avant du véhicule ou une pièce de façade arrière de véhicule, ou une peau de pare-chocs destinée à être disposée à l'avant ou à l'arrière du véhicule, ou une armature de parechocs avant ou arrière.

Dans un mode de réalisation de l'invention la pièce d'équipement est une armature de parechocs avant et comporte une partie supérieure de l'armature de pare-chocs et une partie de façade de l'armature de pare-chocs s'étendant dans un deuxième plan, la partie supérieure étant destinée à s'étendre au-dessus de la partie de façade et la partie de façade à s'étendre sensiblement verticalement à l'avant du véhicule lorsque l'armature est installée sur le véhicule , la paroi de fond étant sensiblement parallèle au premier plan. Dans un mode de réalisation de l'invention, l'armature de parechocs comporte au moins deux cavités de fixation, chacune étant disposée à proximité de deux bords opposés de l'armature de pare-chocs situés de part et d'autre d'un plan médian à l'armature et perpendiculaire au deuxième plan.

L'invention concerne aussi un véhicule comportant une pièce d'équipement, ou une armature de parechocs suivant l'invention, fixée audit véhicule par au moins une vis de fixation traversant l'orifice de fixation de la cavité de fixation, la vis de fixation comportant une tête de fixation.

Dans un mode de réalisation, l'invention concerne aussi un véhicule dans lequel la vis de fixation comporte un corps d'un premier diamètre surmontée d'une tête de fixation d'un deuxième diamètre supérieur au premier diamètre, la dimension de l'orifice de fixation dans la direction parallèle à la direction allant de l'orifice de fixation vers le trou de passage est agencée de sorte qu'une partie de la tête de fixation passe au travers du trou de passage lorsque le corps de la vis est en butée contre un bord de l'orifice de fixation disposé le plus prêt dudit trou de passage .

Dans un mode de réalisation, l'invention concerne aussi un véhicule dans lequel, le trou de passage est en vis-à-vis de l'orifice de fixation parallèlement à l'axe longitudinal du véhicule, la paroi de fond étant sensiblement parallèle aux axes longitudinal et transversal du véhicule.

L'invention concerne aussi un procédé de fixation d'une armature de pare-chocs selon l'une des revendications 3 et 4 à un véhicule, comportant dans l'ordre les étapes successives suivantes :
- Un positionnement de l'armature de pare-chocs par rapport au véhicule de sorte à permettre le vissage d'une vis de fixation sur une interface de fixation située sur le véhicule, la vis passant au travers de l'orifice de fixation disposé sur la paroi de fond de la cavité,
- un vissage de la vis sans serrage de sorte à maintenir la vis par rapport à son interface de fixation,
- un déplacement de l'armature de pare-chocs par rapport à la vis de fixation de sorte à respecter des conditions d'aspect et d'affleurements de l'armature de pare-chocs par rapport au véhicule, de préférence jusqu'à ce qu'une partie de la tête de fixation de la vis se positionne dans le trou de passage.
- un serrage de la vis de fixation.

### DESCRIPTION DETAILLEE

L'invention sera mieux comprise à la lecture de la description qui va suivre, donnée uniquement à titre d'exemple et faite en se référant aux dessins annexés, sur lesquels :
[Fig.1] représente une vue générale de dessus d'une armature de pare-chocs selon l'invention.
[Fig.3] représente une vue de dessus en perspective de la zone de la cavité.

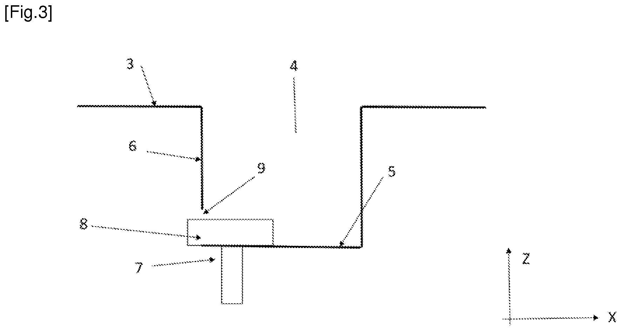

[Fig.3] représente une vue schématique en section selon un plan XZ d'une cavité selon l'invention.

Les dessins sont des représentations schématiques servant à faciliter la compréhension de l'invention. Les composants ne sont pas forcément représentés à l'échelle.

Dans la description qui suit, le terme « comprendre » est synonyme de « inclure » et n'est pas limitatif en ce qu'il autorise la présence d'autres éléments ou moyens d'un module de projecteur. Il est entendu que le terme « comprendre » inclut les termes « consister en ». Sur les différentes figures, les mêmes références désignent des éléments identiques ou similaires.

La direction X est l'axe longitudinal du véhicule en ordre de marche, orienté de l'avant du véhicule vers l'arrière du véhicule

La direction Y est la direction transverse du véhicule en ordre de marche.

La direction Z est la verticale du véhicule orientée vers le haut.

Les représentations schématiques telles que présentées le sont dans un cas particulier d'un dispositif de vision tête haute. Il va de soi que l'invention ne se limite pas à ce cas particulier d'un dispositif de vision tête haute mais concerne tous types de dispositifs ou boîtiers implantés entre la traverse de véhicule et le bas du pare-brise.

Par ailleurs, le terme « sensiblement » sera utilisé pour indiquer qu'un léger écart est admis par rapport à une position ou disposition nominale prédéterminée, tout en restant inclus dans le cadre de l'invention.

Dans la description qui va suivre, l'invention se rapporte à une armature de pare-chocs 2 avant.

L'invention n'est nullement limitative à une armature de pare-chocs avant 2 et la transposition de l'invention à d'autres pièces d'équipements est à la portée d'un homme du métier. Par exemple, la pièce d'équipement peut être une armature de parechocs arrière, une pièce de façade avant ou arrière de véhicule, ou une peau de pare-chocs ou un équipement extérieur, ou un équipement intérieur de véhicule.

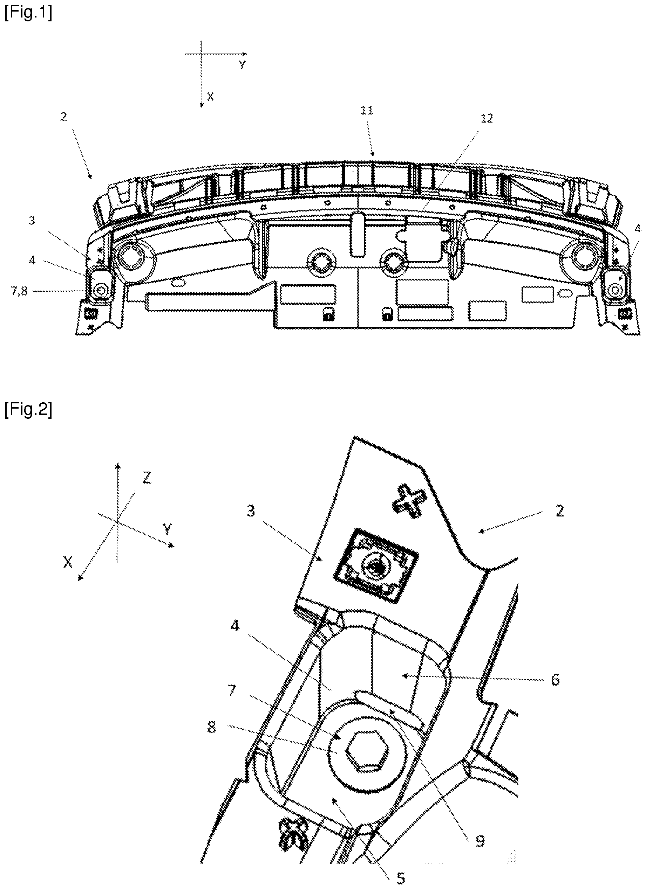

La pièce d'équipement de véhicule telle que représentée en figure 1 est une armature 2 de pare-chocs avant comportant une paroi support 3, une cavité de fixation 4 débouchant par une ouverture dans la paroi support 3, la cavité de fixation 4 comportant une paroi de fond 5 reliée à la paroi support 3 par une paroi latérale 6, la paroi de fond 5 comportant un orifice de fixation destiné à être traversé par une vis de fixation 7 comportant une tête de fixation 8.

Comme illustré en figure 2, la tête de fixation 8 est aussi dénommée tête de vissage et elle comprend une interface de vissage destinée à coopérer avec un outil de vissage, et le plus souvent une rondelle, destinée à être disposée sous l'interface de de vissage 8, entre l'interface de vissage 8 et la paroi de fond 5.

Dans le cas de la présence d'une rondelle, l'interface de vissage et la rondelle constituent la tête de fixation 8.

La paroi latérale 6 comporte un trou de passage 9 disposé à la jonction avec la paroi de fond 5, s'étendant au moins parallèlement à la paroi de fond 5, de sorte à permettre le passage d'une partie de la tête fixation 9 dans ledit trou de passage 9 lors du déplacement, parallèlement à la paroi de fond 5 et en direction dudit trou de passage 9, de la vis de fixation 7 disposée dans l'orifice de fixation

Ainsi la pièce d'équipement 2 est apte à se déplacer par rapport à la vis de fixation 7 de manière à rapprocher la paroi latérale de la vis, jusqu'à ce qu'une partie de la tête de fixation rentre dans le trou de passage 9, donc d'une distance supérieure par rapport à une situation dans laquelle paroi latérale 6 serait pleine, c'est-à-dire ne comprenant pas ledit trou de passage 9.

En effet, si la paroi latérale 6 était pleine, c'est-à-dire sans le trou de passage 9, la tête de fixation 8 rentrerait en contact avec la paroi latérale 6 sans pouvoir aller au-delà de la paroi latérale 6, lors du déplacement de la pièce d'équipement, ce qui limiterait son déplacement dans ladite direction de la vis de fixation 7.

La présence du trou de passage 9 permet donc d'avoir une dimension réduite de la cavité 4 dans la direction et entre l'extrémité de l'orifice de fixation la plus proche du trou de passage 9 de la paroi latérale 6 et ledit trou de passage 9, tout en permettant un déplacement dans cette direction plus grand.

L'armature de parechocs avant 2 pour véhicule, comporte une partie supérieure 11 s'étendant dans un premier plan perpendiculaire à une partie de façade 12 de l'armature de pare-chocs 2 s'étendant dans un deuxième plan, la partie supérieure 11 est destinée à s'étendre au-dessus de la partie de façade 12 de l'armature 2 de parechocs. La partie supérieure 11 est destinée à être disposée sous le capot avant du véhicule lorsque le capot est fermé. La partie de façade 12 de l'armature 2 de pare-chocs est destinée à s'étendre sensiblement verticalement à l'avant du véhicule lorsque l'armature de pare-chocs 2 est installée sur le véhicule. Dans la représentation de la figure 1, l'armature de parechocs 2 comporte une partie de façade 12 qui est disposée à l'avant du véhicule sensiblement dans un plan YZ. Dans cette même représentation de la figure 1, l'armature de pare-chocs 2 comporte deux parties opposées de façade qui sont destinées s'étendre latéralement par rapport aux côtés du véhicules, lesdites parties opposées de façade s'étendant sensiblement dans un plan XZ,

Tel que représentée en figure 1, la paroi de fond 5 est sensiblement parallèle au premier plan. En d'autre termes, en situation véhicule, la paroi de fond 5 est sensiblement dans un plan XY.

Tel que représenté en figure 1, la paroi support 3 est situé au-dessus de la paroi de fond 5 en situation véhicule.

Ainsi le trou de passage 9 permet d'évacuer l'eau pouvant s'accumuler dans la cavité 4.

L'armature 2 de parechocs comporte au moins deux cavités de fixation 4. Chacune des cavité 4 est disposée à proximité de deux bords opposés de l'armature de pare-chocs situés de part et d'autre d'un plan médian à l'armature. En situation véhicule le plan médian est un plan XZ passant par le milieu transversalement de l'armature de pare-chocs. Ledit plan médian, est un plan XZ en situation véhicule, et est perpendiculaire au deuxième plan. Dans la représentation de la figure 1, les cavités 4 sont disposées au niveau des portions de l'armature 2 de pare-chocs qui s'étendent le long des côtés latéraux du véhicule.

Dans une autre variante, les cavités 4 sont disposées au niveau de la partie de l'armature de pare-chocs qui s'étend en avant du véhicule sensiblement dans un plan ZY.

Le véhicule comporte une armature de pare-chocs 2, suivant l'invention, ladite armature de pare-chocs 2 étant, fixée audit véhicule par au moins une vis de fixation traversant l'orifice de fixation. La vis de fixation coopère avec une interface de fixation du véhicule. L'orifice de fixation permet à la vis de fixation 7 de traverser la paroi de fond 5.

Les dimensions de l'orifice de fixation permettent à ladite armature de pare-chocs 2 de se déplacer par rapport à la vis de fixation 7, celle-ci étant positionnée maintenue dans son interface de fixation et non serrée. Les dimensions de l'orifice de fixation permettent à ladite armature de pare-chocs 2 de se déplacer par rapport à la vis de fixation 7 selon les dimensions de l'orifice de fixation et selon des contacts éventuels de l'armature de pare-chocs 2 avec des pièces du véhicule1 adjacentes à l'armature de pare-chocs 2. Les dimensions de l'orifice de fixation permettent aussi à ladite armature de pare-chocs 2 de se déplacer par rapport à la vis de fixation 7 et selon des contacts éventuels de la tête de fixation 7 avec la paroi latérale 6.

Le fait d'avoir un trou de passage 9 permet d'allonger la distance possible de déplacement de l'armature de pare-chocs 2 dans la direction allant du trou de passage 9 de la paroi latérale 6 vers de l'orifice de fixation, permettant à la tête de fixation 8 de dépasser de la paroi latérale 6 de la cavité 4.

La figure 2 représente une vue de dessus de l'armature 2 de pare-chocs dans la région de la cavité 4, dans laquelle la tête de fixation 8 de la vis de fixation 7 est représentée dans une position dans laquelle la tête de fixation ne passe pas au travers du trou de passage 9.

La figure 3 représente une vue schématique en section de la cavité 4 avec une vis de fixation 7, insérée dans l'orifice de fixation, dont la tête de fixation 8 passe au travers du trou de passage 9.

L'armature de pare-chocs 2 comporte une cavité 4 avec une paroi de fond 5 comprenant l'orifice de fixation au sein duquel est insérée la vis de fixation 7 qui comporte un corps avec une extrémité fileté opposée à la tête de fixation 8, le corps étant d'un premier diamètre (d1) surmontée de la tête de fixation 8 d'un deuxième diamètre (d2) supérieur au premier diamètre (d1), Le deuxième diamètre (d2) est supérieur aux dimensions transversales et longitudinale de l'orifice de fixation, et le diamètre (d1) est inférieur aux dimensions transversale et longitudinale de l'orifice de fixation dans le plan de la paroi de fond 5, de sorte à permettre à l'armature de pare-chocs de se déplacer par rapport à la vis de fixation préfixée au véhicule, la paroi de fond étant maintenue dans une direction perpendiculaire à la paroi de fond 5 vers le haut en situation véhicule, en d'autres termes dans une direction sensiblement verticale, par la tête de fixation 8.

La tête de fixation 8 comprend une interface de vissage, destiné à coopérer avec un outil de vissage et éventuellement une rondelle. On considère le diamètre d2 comme celui le diamètre de la rondelle lorsque celle-ci est présente, ou le diamètre de l'interface de vissage lorsque la rondelle n'est pas présente.

La dimension de l'orifice de fixation dans la direction parallèle à la direction entre le trou de passage 9 et l'orifice de fixation est agencée de sorte qu'une partie de la tête de fixation 8 passe au travers du trou de passage 9 lorsque le corps de la vis 7 est en butée contre un bord de l'orifice de fixation disposé le plus près dudit trou de passage 9.

Selon l'invention les différentes dimensions de la cavité, de l'orifice de fixation, du corps de la vis de fixation 7, et la présence du trou de passage 9 permettent des déplacements de l'ordre de plus ou moins 5 millimètres de l'armature de pare-chocs par rapport à la vis préfixée au véhicule, pour des déplacements dans un plan parallèle à la paroi de fond 5.

Le fait de disposer la vis de fixation 7 au sein de la cavité 4 rend la vis 7 quasiment invisible.

Selon les représentations en figure 2 et en figure 3, en situation véhicule, le trou de passage 9 est en vis-à-vis de l'orifice de fixation parallèlement à l'axe longitudinal (X) du véhicule, la paroi de fond 5 étant sensiblement parallèle aux axes longitudinal (X) et transversal (Y) du véhicule.

L'invention concerne aussi un procédé de de fixation d'une armature 2 de pare-chocs selon l'invention, à un véhicule, comportant dans les étapes successives suivantes :
- Un positionnement de l'armature de pare-chocs 2 par rapport au véhicule de sorte à permettre le vissage de la vis de fixation 7 sur une interface de fixation située sur le véhicule, la vis 7 passant au travers de l'orifice de fixation de la paroi de fond 5 de la cavité 4,
- Un vissage de la vis 7 sans serrage de sorte à maintenir la vis de fixation 7 dans son interface de fixation,
- Un déplacement de l'armature de pare-chocs 2 par rapport à la vis de fixation 7, et donc par rapport au véhicule, de sorte à respecter des conditions d'aspect et d'affleurements de l'armature de pare-chocs 2 par rapport au véhicule,
- Un serrage de la vis de fixation 7.

Le procédé de fixation selon l'invention permet d'avoir des conditions d'aspect et d'affleurement de l'armature de pare-chocs 2, par rapport aux pièces adjacentes du véhicule, satisfaisantes malgré les dispersions géométriques de fabrications des pièces, et ce avec l'avantage d'avoir une dimension réduite de la cavité 4 dans une direction parallèle à la direction allant de l'orifice de fixation vers le trou de passage 9, entre l'orifice de fixation et le trou de passage 9.

Lorsque l'ensemble des vis de fixation 7 sont serrées, le montage et la fixation de l'armature de pare-chocs 2 au véhicule est achevé.

Le procédé de fixation est répété successivement ou simultanément pour chaque vis de fixation 7 destinée à être insérée dans chacun des orifices de fixation de chaque paroi de fond 6 d'une cavité 4.

Dans la représentation de la figure 1, l'armature de pare-chocs 2 avant comporte deux cavités 4 disposées chacune à une extrémité opposée de l'armature 2 de pare-chocs. Chacune des extrémités opposées de l'armature 2 est fixée à un des côtés du véhicule, par une vis de fixation 7 insérée dans l'orifice de fixation de la paroi de fond 4, selon le procédé selon l'invention.

Tel que représenté en figure 2, la direction allant de l'orifice de fixation vers le trou de passage est parallèle à la direction X du véhicule. L'invention permet ainsi un rattrapage des jeux et affleurement avec une dimension réduite de la cavité 4 selon cette direction X.

## Revendications

1. Pièce d'équipement de véhicule (1) comportant :
- Une paroi support (3)
- Une cavité de fixation (4) débouchant par une ouverture dans la paroi support (3),
∘ La cavité de fixation (4) comportant une paroi de fond (5) reliée à la paroi support (3) par une paroi latérale (6),
∘ La paroi de fond (5) comportant un orifice de fixation destiné à être traversé par une vis de fixation (7) comportant une tête de fixation (8),
**caractérisée en ce que** la paroi latérale (6) comporte un trou de passage (9) disposé à la jonction avec la paroi de fond (5), s'étendant au moins parallèlement à la paroi de fond (5), de sorte à permettre le passage d'une partie de la tête fixation (8) dans le trou de passage (9) lors du déplacement de la vis de fixation (7) disposée dans l'orifice de fixation, en direction dudit trou de passage.

2. Pièce d'équipement selon la revendication 1, formant une pièce de façade avant du véhicule ou une pièce de façade arrière de véhicule (1), ou une peau de pare-chocs destinée à être disposée à l'avant ou à l'arrière du véhicule (1), ou une armature de parechocs (2) avant ou arrière.

3. Armature de parechocs (2) avant pour véhicule (1) formant une pièce d'équipement suivant la revendication 1, comportant une partie supérieure (11) de l'armature (2) de pare-chocs (2) et une partie de façade (12) de l'armature (2) de pare-chocs s'étendant dans un deuxième plan, la partie supérieure (11) étant destinée à s'étendre au-dessus de la partie de façade(12) et la partie de façade (12) à s'étendre sensiblement verticalement à l'avant du véhicule (1) lorsque l'armature (2) est installée sur le véhicule (1), la paroi de fond (5) étant sensiblement parallèle au premier plan.

4. Armature de parechocs (2) suivant la revendication 3, comportant au moins deux cavités de fixation, chacune étant disposée à proximité de deux bords opposés de l'armature de pare-chocs situés de part et d'autre d'un plan médian à l'armature et perpendiculaire au deuxième plan.

5. Véhicule (1) comportant une pièce d'équipement suivant l'une des revendications 1 à 2, ou une armature (2) de parechocs suivant l'une des revendications 3 ou 4, fixée audit véhicule (1) par au moins une vis de fixation (7) traversant l'orifice de fixation de la cavité de fixation (4), la vis de fixation comportant une tête de fixation (8).

6. Véhicule (1) suivant la revendication précédente, dans lequel :
- la vis de fixation (7) comporte un corps d'un premier diamètre (d1) surmontée d'une tête de fixation (8) d'un deuxième diamètre (d2) supérieur au premier diamètre (d1),
- la dimension de l'orifice de fixation dans la direction parallèle à la direction allant de l'orifice de fixation vers le trou de passage (9) est agencée de sorte qu'une partie de la tête de fixation (8) passe au travers du trou de passage (9) lorsque le corps de la vis (7) est en butée contre un bord de l'orifice de fixation disposé le plus prêt dudit trou de passage (9).

7. Véhicule (1) suivant la revendication précédente, dans lequel le trou de passage (9) est en vis-à-vis de l'orifice de fixation parallèlement à l'axe longitudinal (X) du véhicule (1), la paroi de fond étant sensiblement parallèle aux axes longitudinal (X) et transversal (Y) du véhicule (1).

8. Procédé de fixation d'une armature de pare-chocs (2) selon l'une des revendications 3 et 4, à un véhicule (1), comportant dans l'ordre les étapes successives suivantes :
- Un positionnement de l'armature de pare-chocs (2) par rapport au véhicule (1) de sorte à permettre le vissage d'une vis de fixation (2) sur une interface de fixation située sur le véhicule (1), la vis passant au travers de l'orifice de fixation disposé sur la paroi de fond (5) de la cavité (4),
- Un vissage de la vis (7) sans serrage de sorte à maintenir la vis (7) par rapport à son interface de fixation,
- Un déplacement de l'armature de pare-chocs (2) par rapport à la vis de fixation (2) de sorte à respecter des conditions d'aspect et d'affleurements de l'armature de pare-chocs par rapport au véhicule (1), de préférence jusqu'à ce qu'une partie de la tête de fixation (8) de la vis (7) se positionne dans le trou de passage (9).
- Un serrage de la vis de fixation (7).

## Patentansprüche

1. Fahrzeug-Ausstattungsteil (1) mit:
- eine Stützwand (3)
- ein Befestigungshohlraum (4), der durch eine Öffnung in der Tragwand (3) mündet,
oder Befestigungshohlraum (4) weist eine Bodenwand (5) auf, die über eine Seitenwand (6) mit der Trägerwand (3) verbunden ist,
o die Bodenwand (5) weist eine Befestigungsöffnung auf, durch die eine Befestigungsschraube (7) mit einem Befestigungskopf (8) hindurchtritt,
die Erfindung ist **dadurch gekennzeichnet, dass** die Seitenwand (6) ein Durchgangsloch (9) aufweist, das an der Verbindung mit der Bodenwand (5) angeordnet ist und sich mindestens parallel zur Bodenwand (5) erstreckt, sodass ein Teil des Befestigungskopfes (8) in das Durchgangsloch (9) hineinragen kann, wenn die Befestigungsschraube (7), die in der Befestigungsöffnung angeordnet ist, in Richtung des Durchgangslochs bewegt wird.

2. Ausrüstungsteil nach Anspruch 1, das ein vorderes Fassadenteil des Fahrzeugs oder ein hinteres Fassadenteil des Fahrzeugs (1) oder eine Stoßstangenhaut, die dazu bestimmt ist, vor oder hinter dem Fahrzeug (1) angeordnet zu werden, oder eine vordere oder hintere Stoßstangenbewehrung (2) bildet.

3. Vorderer Stoßfängeranker (2) für ein Fahrzeug (1), der ein Ausstattungsteil nach Anspruch 1 bildet, mit einem oberen Teil (11) des Stoßfängerankers (2) und einem Fassadenabschnitt (12) des Stoßfängerankers (2), der sich in einer zweiten Ebene erstreckt, wobei der obere Teil (11) sich über den Fassadenabschnitt (12) erstreckt und der Fassadenabschnitt (12) sich im Wesentlichen vertikal vor dem Fahrzeug (1) erstreckt, wenn der Rahmen (2) ist am Fahrzeug (1) angebracht ist, wobei die Bodenwand (5) im Wesentlichen parallel zur ersten Ebene verläuft.

4. Stoßfängerbewehrung (2) nach Anspruch 3, die wenigstens zwei Befestigungshohlräume aufweist, die jeweils in der Nähe von zwei gegenüberliegenden Kanten der Stoßfängerbewehrung angeordnet sind, die auf beiden Seiten einer Mittelebene der Bewehrung und senkrecht zur zweiten Ebene angeordnet sind.

5. Fahrzeug (1) mit einem Ausstattungsteil nach einem der Ansprüche 1 bis 2 oder einer Stoßfänger-Armatur (2) nach einem der Ansprüche 3 oder 4, die an dem Fahrzeug (1) durch mindestens eine Befestigungsschraube (7) befestigt ist, die die Befestigungsöffnung des Befestigungshohlraums (4) durchsetzt, wobei die Befestigungsschraube einen Befestigungskopf (8) aufweist.

6. Fahrzeug (1) nach dem vorhergehenden Anspruch, wobei:
- die Befestigungsschraube (7) weist einen Körper mit einem ersten Durchmesser (D1) auf, auf dem ein Befestigungskopf (8) mit einem zweiten Durchmesser (D2) angeordnet ist, der größer ist als der erste Durchmesser (D1),
- die Abmessung der Befestigungsöffnung in Richtung parallel zur Richtung von der Befestigungsöffnung zum Durchgangsloch (9) ist so angeordnet, dass ein Teil des Befestigungskopfes (8) durch das Durchgangsloch (9) hindurchtritt, wenn der Schraubenkörper (7) an einem am weitesten aufliegenden Rand der Befestigungsöffnung des Durchgangslochs (9) anliegt.

7. Fahrzeug (1) nach dem vorhergehenden Anspruch, bei dem das Durchgangsloch (9) der Befestigungsöffnung parallel zur Längsachse (X) des Fahrzeugs (1) gegenüberliegt, wobei die Bodenwand im Wesentlichen parallel zur Längsachse (X) und zur Querachse (Y) des Fahrzeugs (1) verläuft.

8. Verfahren zur Befestigung einer Stoßfängerbewehrung (2) nach einem der Ansprüche 3 und 4 an einem Fahrzeug (1), das in der Reihenfolge die folgenden aufeinander folgenden Schritte umfasst:
- eine Positionierung des Stoßfängerankers (2) in Bezug auf das Fahrzeug (1), sodass eine Befestigungsschraube (2) auf eine Befestigungsschnittstelle am Fahrzeug (1) aufgeschraubt werden kann, wobei die Schraube durch die an der Bodenwand (5) des Hohlraums (4) angeordnete Befestigungsöffnung verläuft,
- schrauben der Schraube (7) ohne Einspannen, um die Schraube (7) relativ zu ihrer Befestigungsschnittstelle zu halten,
- eine Verschiebung des Stoßfängerankers (2) relativ zur Befestigungsschraube (2), um Auftritts- und Bündelbedingungen des Stoßfängerankers relativ zum Fahrzeug (1) zu erfüllen, vorzugsweise bis ein Teil des Befestigungskopfes (8) der Schraube (7) in der Durchgangsbohrung (9) positioniert ist.
- ein Anziehen der Befestigungsschraube (7).

## Claims

1. Vehicle equipment part (1) comprising:
- a support wall (3)
- fixing cavity (4) opening through an opening into the support wall (3),
o the fixing cavity (4) comprising a bottom wall (5) connected to the support wall (3) by a side wall (6),
o the bottom wall (5) comprising a fixing orifice intended to be traversed by a fixing screw (7) comprising a fixing head (8),
**characterized in that** the side wall (6) comprises a passage hole (9) arranged at the junction with the bottom wall (5), extending at least parallel to the bottom wall (5), so as to allow the passage of a part of the fastening head (8) into the passage hole (9) during the displacement of the fastening screw (7) arranged in the fastening orifice, in the direction of said passage hole.

2. Equipment part according to claim 1, forming a front vehicle facade part or a rear vehicle facade part (1), or a bumper skin intended to be arranged at the front or at the rear of the vehicle (1), or a front or rear bumper frame (2).

3. Front bumper frame (2) for a vehicle (1) forming an equipment part according to claim 1, comprising an upper part (11) of the bumper frame (2) and a front part (12) of the bumper frame (2) extending in a second plane, the upper part (11) being intended to extend above the front part (12) and the front part (12) to extend substantially vertically in front of the vehicle (1) when the frame (2) is installed on the vehicle (1), bottom wall (5) being substantially parallel to the first plane.

4. A bumper strength member (2) according to claim 3, comprising at least two fixing cavities, each being disposed in the vicinity of two opposite edges of the bumper strength member situated on either side of a mid-plane of the strength member and perpendicular to the second plane.

5. Vehicle (1) comprising an equipment part according to one of claims 1 to 2, or a bumper frame (2) according to one of claims 3 or 4, fixed to the said vehicle (1) by at least one fixing screw (7) passing through the fixing orifice of the fixing cavity (4), the fixing screw comprising a fixing head (8).

6. Vehicle (1) according to the preceding claim, in which:
- the fixing screw (7) comprises a body of a first diameter (d1) surmounted by a fixing head (8) of a second diameter (d2) greater than the first diameter (d1),
- the size of the fixing hole in the direction parallel to the direction from the fixing hole to the through hole (9) is arranged so that a part of the fixing head (8) passes through the through hole (9) when the body of the screw (7) abuts against an edge of the fixing hole closest to said through hole (9).

7. Vehicle (1) according to the preceding claim, in which the passage hole (9) is opposite the fixing orifice parallel to the longitudinal axis (X) of the vehicle (1), the bottom wall being substantially parallel to the longitudinal (X) and transverse (Y) axes of the vehicle (1).

8. Method for attaching a bumper frame (2) according to one of claims 3 and 4 to a vehicle (1), comprising, in order, the following successive steps:
- positioning of the bumper frame (2) with respect to the vehicle (1) so as to allow the screwing of a fixing screw (2) onto a fixing interface located on the vehicle (1), the screw passing through the fixing orifice arranged on the bottom wall (5) of the cavity (4),
- screwing of the screw (7) without tightening so as to hold the screw (7) in relation to its fixing interface,
- A movement of the bumper frame (2) with respect to the fastening screw (2) so as to comply with the appearance and flush conditions of the bumper frame with respect to the vehicle (1), preferably until a part of the fastening head (8) of the screw (7) is positioned in the passage hole (9).
- A tightening of the fixing screw (7).
